# EUROPÄISCHE PATENTSCHRIFT

(11) **EP 2 857 689 B1**
(45) Veröffentlichungstag und Bekanntmachung des Hinweises auf die Patenterteilung: **30.08.2023**
(21) Anmeldenummer: 13075069.8
(22) Anmeldetag: 02.10.2013
(51) Int. Cl.: F04C 21/00, F01C 9/00, F04B 35/01, F01B 9/04, F16H 35/02, F01C 17/02

(54) **Umlaufgetriebekolbenmaschine mit einem Hebelsystem, auf einer Achse angeordnet**
Circulation transmission piston engine with a lever system, arranged on an axle
Machine à pistons à train épicycloïdal dotée d'un système de levage, disposée sur un axe

(43) Veröffentlichungstag der Anmeldung: 08.04.2015
(73) Patentinhaber: Dr. Gnauck & Partner Erfindergesellschaft bR, 10178 Berlin (DE)
(72) Erfinder: Schwäbisch, Reinhard, 15345 Altlandsberg (DE)
(74) Vertreter: ETL IP Patent- und Rechtsanwaltsgesellschaft mbH

(56) Entgegenhaltungen:
- DE-A1- 2 523 637
- DE-A1- 10 210 187
- DE-A1-102005 061 286
- US-A- 4 788 891

## Beschreibung

Die Erfindung betrifft eine sowohl als Kraft- als auch als Arbeitsmaschine einsetzbare Umlaufgetriebekolbenmaschine mit einem umlaufenden Getriebe und einem Hebelsystem bei der die Umlaufachse und Hebelachse zentrisch gelagert sind. Das Umlaufgetriebe umfasst zwei Zahnräder im Zentrum, die wiederum von mindestens zwei weiteren Zahnrädern auf einer definierten Kreisbahn mit einem konstanten Durchmesser umlaufen werden, wobei die vorgenannten Zahnräder allesamt jeweils als zwei Paare eine gleiche Größe und eine elliptische Ausbildung aufweisen (sogenannte Ovalzahnräder). Der konstante Achsabstand zwischen den Zahnrädern im Zentrum und den umlaufenden Zahnrädern ist die Summe aus dem größeren und dem kleineren Halbdurchmesser der elliptischen Zahnräder, wobei die umlaufenden Ovalzahnräder bezogen auf ihren größten Durchmesser um 90 Grad versetzt und fest miteinander verbunden sind, und wobei ein Zahnrad im Zentrum fest auf der zentralen Achse gehalten ist, das zweite Zahnrad kann sich dahingegen im Zentrum auf der Achse verdrehen, ist aber axial mit der Kippachse mindestens eines Hebels verbunden, derart, dass das Umlaufgetriebe mit einer Relativbewegung übertragen auf die Drehachse des Hebels eine oszillierende Bewegung des Hebels erzeugt, der mit einem angeschlossenen Zug-Schubstab einen angeschlossenen Arbeitskolben geradlinig in einer Laufbuchse zu bewegen vermag. Der sich bewegende Kolben kann je nach Ausführung als Kraft- oder Arbeitsmaschine, primär oder sekundär, in Bezug auf die Drehzahl des umlaufenden Getriebes in Verbindung mit einer Ab-/Antriebswelle genutzt werden.

In der Praxis ist für die Umwandlung einer stetigen drehenden Bewegung in eine unstetige Hin- und Herbewegung ein Kurbelgetriebe bekannt: das heißt, ein Kurbelzapfen auf einer kreisförmigen Umlaufbewegung am Ende des Kurbelhebels überträgt mit einem Pleuel Zug- und Druckkräfte auf eine in einer Kulisse (Laufbuchse) geführten Baugruppe (Kolben). Die Druckschrift DE 102 10 187 A1 offenbart die Anwendung eines solchen Kurbelgetriebes.

Dieser bekannten technischen Lösung haftet der Nachteil an, dass die Lenkstangen (Kurbel, Pleuel) als Bestandteil der sich drehenden Masse eine Unwucht erzeugen (erster und zweiter Ordnung). Der sich linear bewegende Kolben erreicht pro Umdrehung zwei Extrempunkte. Eine technisch notwendige Verbesserung der Stetigkeit erfordert eine aufwendige Erweiterung des Systems mit mehreren Kurbelgetrieben. Das technisch notwendige Lenkstangenverhältnis erzeugt eine große Querkraft (Kolbenreibung) an der linear geführten Baugruppe (Kolben). Die technisch notwendige geometrische Überlappung des Handlungsrahmens der Kurbel mit dem des Kolbens in seiner Laufbuchse verhindert eine ökonomische, steuertechnische Beeinflussung des Expansions-/Kompressionsraums für eine Steigerung des Wirkungsgrades.

Die Druckschriften US 4 788 891 A, DE 25 23 637 A1 und DE 10 2005 061286 offenbaren Lösungen zur Umwandlung einer stetigen Drehbewegung in eine unstetige Hin- und Herbewegung unter Verwendung von Zahnradgetrieben.

Ziel der Erfindung besteht darin, die Funktionsfähigkeit einer Umlaufgetriebekolbenmaschine zu sichern ohne die Nachteile einer Kurbelwelle, als auch eine Fertigung mit einem vertretbaren Aufwand zu gewährleisten.

Der Erfindung liegt die Aufgabe zugrunde, eine wahlweise als Kraft- oder Arbeitsmaschine auszubildende Umlaufgetriebekolbenmaschine mit einem großen Wirkungsgrad bereitzustellen.

Diese Aufgabe wird erfindungsgemäß durch die im Anspruch 1 offenbarten technischen Mittel gelöst. Die in den abhängigen Ansprüchen offenbarten Merkmale beziehen sich auf eine Ausgestaltung der Mittel des unabhängigen Anspruches.

Die Erfindung soll nachfolgend an einem Ausführungsbeispiel näher erläutert werden. In den zugehörigen Zeichnungen zeigen:
Fig. 1 eine Umlaufgetriebekolbenmaschine in einer perspektivischen Darstellung ohne Maschinengehäuse.

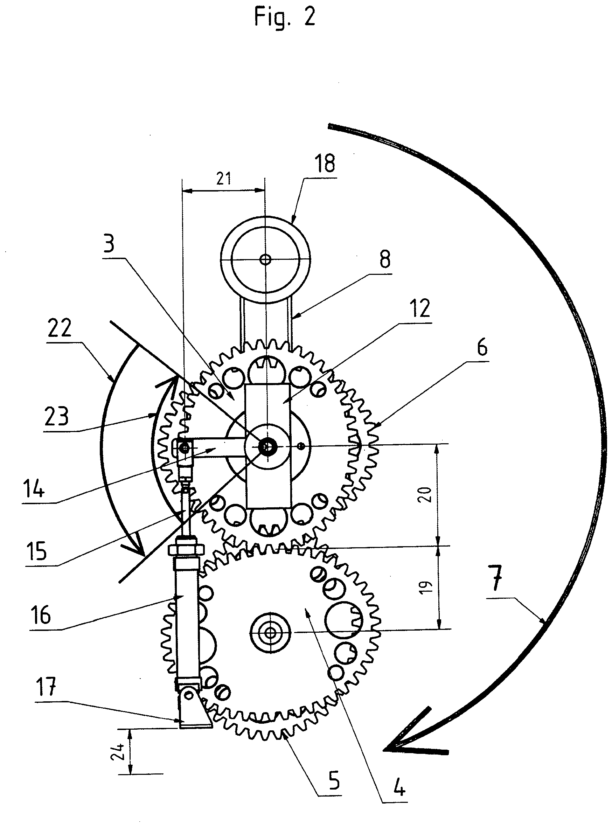

Fig. 2 eine Frontalansicht der erfindungsgemäß ausgebildeten Umlaufgetriebekolbenmaschine.

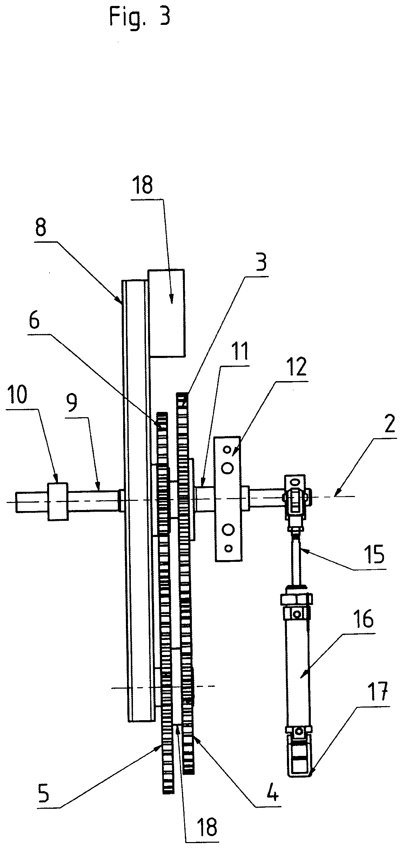

Fig. 3 eine Seitenansicht der erfindungsgemäß ausgebildeten Umlaufgetriebekolbenmaschine.

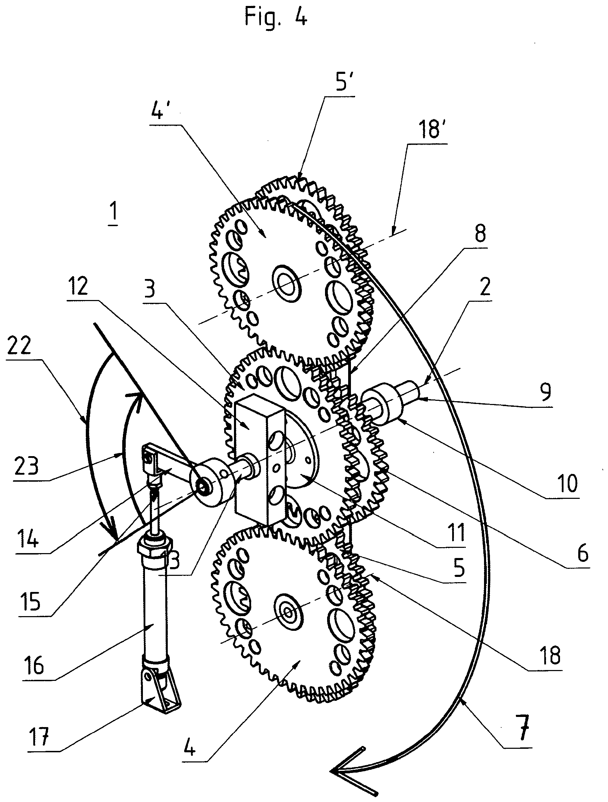

Fig. 4 eine perspektivische Darstellung der erfindungsgemäß ausgebildeten Umlaufgetriebekolbenmaschine ohne Maschinengehäuse, mit 6 Zahnrädern.

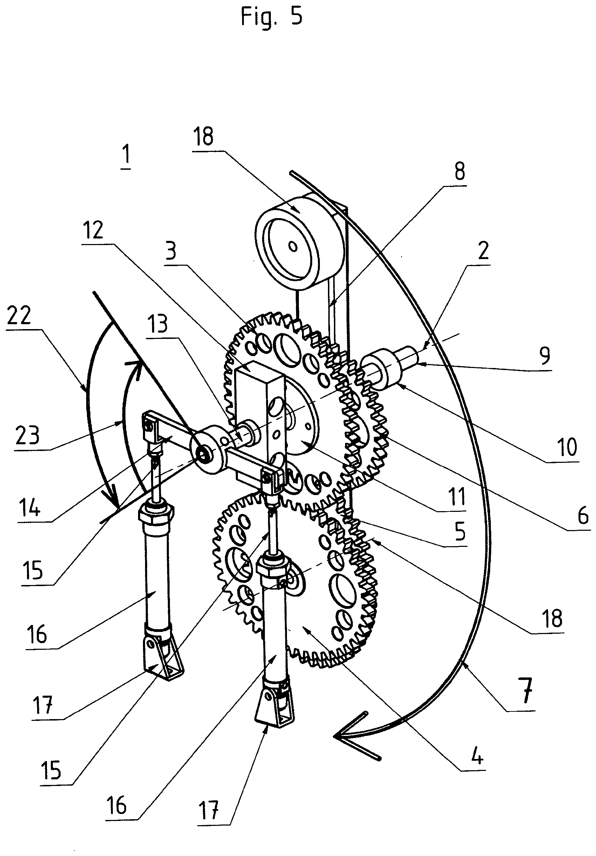

Fig. 5 eine perspektivische Darstellung der erfindungsgemäß ausgebildeten Umlaufgetriebekolbenmaschine ohne Maschinengehäuse, mit 2 Hebel und 2 Kolben.

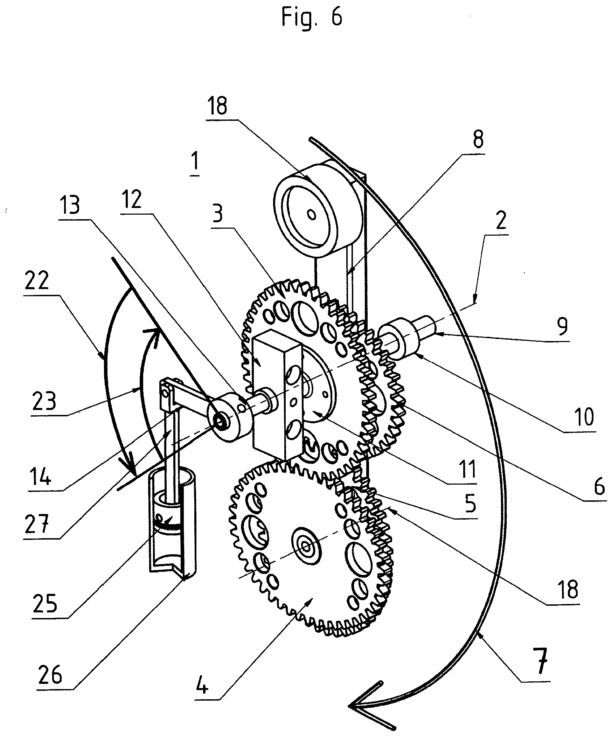

Fig. 6 eine perspektivische Darstellung der erfindungsgemäß ausgebildeten Umlaufgetriebekolbenmaschine ohne Maschinengehäuse, mit 1 Hebel und 1 Kolben mit Gelenk.

In einem nicht dargestellten Maschinengehäuse (1) befindet sich die erfindungsgemäß ausgebildete Umlaufgetriebekolbenmaschine mit einem den Bewegungsablauf umwandelnden Ovalzahnradgetriebe, angeordnet um eine zentrale Bewegungsachse (2). Die Umlaufgetriebekolbenmaschine besteht aus zwei Ovalzahnradpaaren. Ein erstes Zahnradpaar (3, 6) ist auf der zentralen Bewegungsachse (2) angeordnet, und mindestens ein zweites Zahnradpaar (4, 5) befindet sich auf einer Umlaufbahn (7) um die Zahnräder (3, 6), die wiederum gehalten werden von einem rotierenden Formstück (8). Das zahnradhaltende, rotierende Formstück (8) ist starr verbunden mit der Abtriebs-/Antriebswelle (9), deren Drehachse deckungsgleich mit der zentralen Bewegungsachse (2) ist. Die Abtriebs-/Antriebswelle (9) wird in einem Lager (10) als Anschluss zum Gehäuse (1) gehalten, wobei das Bauteil (9) in seinen Freiheitsgraden auf eine Drehbewegung begrenzt wird. Das erste zentrale Zahnrad (3) auf der Achse (2) ist starr und unbeweglich von einem Anschlussflansch (11) gehalten, der wiederum von einem Anschluss (12) zum Gehäuse fixiert wird. Das zweite zentrale Zahnrad (6) auf der zentralen Achse (2) wird von einem Anschlussflansch mit Welle (13) gehalten. Die Welle des Anschlussflansches (13) durchdringt den Anschlussflansch (11). In der Durchdringung ist der Anschlussflansch mit Welle (13) gelagert, wobei das Bauteil (13) in seinen Freiheitsgraden auf eine Drehbewegung begrenzt wird. Auf der Welle des Anschlussflansch (13) ist starr zum Bauteil (13) ein Hebel (14) montiert. Der Hebel (14) folgt nun über das Bauteil (13) den Bewegungen des zweiten zentralen Zahnrades (6). Am Hebel (14) ist über die Länge (21) des Hebels (14) gelenkig ein Schub-/Zugelement (15) angeschlossen, so dass der Bewegung des Hebels (14) um seine Kippachse (2) folgend eine Hin- und Herbewegung (22; 23) auf einen Arbeitskolben (16) erzeugt wird. Der Arbeitskolben (16) hat über ein Festlager (17) einen Anschluss zum Gehäuse (1).

Die eine elliptische Form aufweisenden Zahnräder (3; 4; 5; 6) der Umlaufgetriebekolbenmaschine stehen kraftschlüssig in ihren Schnittpunkten des jeweiligen größeren Halbdurchmessers (20) mit dem kleineren Halbdurchmesser (19) im Eingriff, wobei die mindestens zwei dezentralen Zahnräder (4; 5) auf einer Umlaufbahn (7) um die mindestens zwei zentralen Zahnräder (3; 6) in einer umlauffähigen Weise angeordnet sind. Die dezentralen Zahnräder (4; 5) mit einer deckungsgleichen Drehachse (18), sind gegeneinander um 90 Grad verdreht und starr miteinander verbunden. Alle Zahnräder der Umlaufgetriebekolbenmaschine (3; 4; 5; 6) sind in der äußeren Form und ihrer Größe identisch.

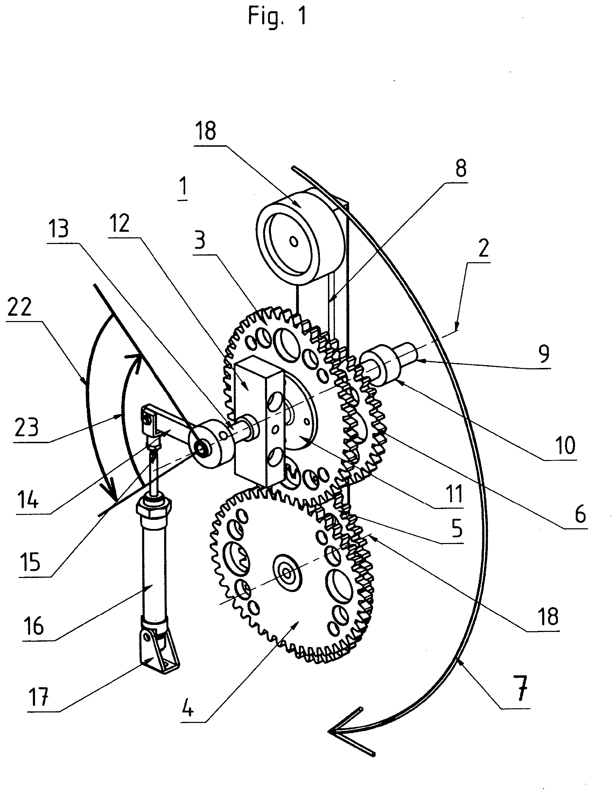

Die in Fig. 1 gezeigten elliptischen Zahnräder sind mit einem Verhältnis des kleineren zum größeren Durchmesser von 1:1,2 dargestellt. Die Zahnflanken der Zahnräder mit einer elliptischen Form weisen eine Zahnflankenkorrektur auf, die von dem Drehwinkel abhängigen Zahnraddurchmesser gekennzeichnet ist und sich damit über den Zahnradumfang ständig und stetig ändert. Für einen Masseausgleich der dezentralen, umlaufenden Zahnräder (4; 5) wird am Ausführungsbeispiel ein Gegengewicht (28) vorgesehen.

Die als Kraft- und Arbeitsmaschine einsetzbare Umlaufgetriebekolbenmaschine ist nur mit dem vorgeschlagenen Ovalzahnradgetriebe, also unter Verwendung rein elliptischer Zahnräder, vorgenannter Ausgestaltung funktionsfähig.

### Aufstellung der Bezugszeichen

1 Maschinengehäuse
2 zentrale Bewegungsachse
3 Zahnrad
4 Zahnrad
5 Zahnrad
6 Zahnrad
7 Umlaufbahn
8 Verbindungsformstück
9 Ab-/Antriebsachse
10 Lager
11 Anschlussflansch
12 Lager
13 Anschlussflansch mit Welle
14 Hebel
15 Zug- Schubelement mit einem Gelenk
16 Zylinder mit Kolben
17 Festlager
18 Drehachse
19 kleinerer Zahnradhalbdurchmesser
20 größerer Zahnradhalbdurchmesser
21 Hebelarm
22 Hebelbewegung Abwärtshub
23 Hebelbewegung Aufwärtshub
24 variabler Abstand Kolbenfestlager
25 Kolben
26 Zylinder mit Laufbuchse
27 Zug- Schubelement mit zwei Gelenke
28 Gegengewicht

## Patentansprüche

1. Umlaufgetriebekolbenmaschine mit einem umlaufenden Getriebe und einem Hebelsystem, wobei
die Umlaufachse (2) und die Hebelachse (2) zentrisch gelagert sind, **dadurch charakterisiert, dass**
das umlaufende Getriebe zwei Zahnräder im Zentrum (3, 6) umfasst, die wiederum von mindestens zwei weiteren Zahnrädern (4, 5, 4', 5') auf einer definierten Kreisbahn mit einem konstanten Durchmesser umlaufen werden (7), wobei die vorgenannten Zahnräder (3, 4, 5, 6, 4', 5') jeweils als zwei Paare eine gleiche Größe und eine elliptische Ausbildung aufweisen, und wobei die umlaufenden Zahnräder (4, 5, 4', 5') jeweils fest miteinander verbunden sind, derart, dass zwischen den Zahnrädern im Zentrum (3, 6) und den umlaufenden Zahnrädern (4, 5, 4', 5') ein konstanter Achsabstand als Summe aus dem jeweils größeren und dem jeweils kleineren Halbdurchmesser der Zahnräder (3, 4, 5, 6, 4', 5') resultiert, **und wobei ferner**
ein Zahnrad im Zentrum fest auf der zentralen Achse gehalten ist (3, 6), das zweite Zahnrad im Zentrum sich dahingegen auf der Achse verdrehen kann (3, 6), aber axial mit der Kippachse (2) mindestens eines Hebels (14) verbunden ist, derart, dass das Umlaufgetriebe mit einer Relativbewegung übertragen auf die Drehachse (2) des Hebels (14), eine oszillierende Bewegung des Hebels (14) erzeugt, der mit einem angeschlossenen Zug-Schubstab (15) einen Arbeitskolben (16) geradlinig in einer Laufbuchse bewegen kann.

2. Umlaufgetriebekolbenmaschine nach Anspruch 1, **dadurch gekennzeichnet, dass** die oszillierende Bewegung des Hebels (14) als Aufwärtshub (23) genutzt werden kann.

3. Umlaufgetriebekolbenmaschine nach Anspruch 1 oder 2, **dadurch gekennzeichnet, dass** die oszillierende Bewegung des Hebels (14) als Abwärtshub (22) genutzt werden kann.

4. Umlaufgetriebekolbenmaschine nach Anspruch 1, **dadurch gekennzeichnet, dass** die oszillierende Bewegung des Hebels (14) als Aufwärtshub (23) und Abwärtshub (22) genutzt werden kann.

5. Umlaufgetriebekolbenmaschine nach einem der vorhergehenden Ansprüche, **dadurch gekennzeichnet, dass** die umlaufenden Zahnräder symmetrisch ausgeführt sind, es sind zusätzlich zu den umlaufenden Zahnrädern (4, 5) zwei weitere, baugleiche Zahnräder (4', 5') in einem Abstand von 180 Grad angeordnet.

6. Umlaufgetriebekolbenmaschine nach einem der vorhergehenden Ansprüche, **dadurch gekennzeichnet, dass** die Anzahl der Hebel (14) um die Kippachse (2) größer eins ist.

7. Umlaufgetriebekolbenmaschine nach einem der vorhergehenden Ansprüche, **dadurch gekennzeichnet, dass** die Anzahl der Kolben (16) größer eins ist.

8. Umlaufgetriebekolbenmaschine nach einem der vorhergehenden Ansprüche, **dadurch gekennzeichnet, dass** die Kolben (16) auch durch Behälter mit Membranen ersetzt werden können.

9. Umlaufgetriebekolbenmaschine nach einem der vorhergehenden Ansprüche, **dadurch gekennzeichnet, dass** diese sowohl als Kraft- oder Arbeitsmaschine einsetzbar ist.

## Claims

1. An epicyclic gear piston machine having an epicyclic gear and a lever system, wherein the axis of rotation (2) and the lever axis (2) are centrically mounted
**characterized in that**
the epicyclic gear comprises two gear wheels (3, 6) in the center, around which at least two further gear wheels (4, 5, 4', 5') revolve on a defined circular path (7) with a constant diameter, wherein the aforementioned gear wheels (3, 4, 5, 6, 4', 5') are each, as two pairs, the same size and elliptically formed, and wherein the revolving gear wheels (4, 5, 4', 5') are rigidly connected to each other such that, between the gear wheels (3, 6) in the center and the revolving gear wheels (4, 5, 4', 5'), a constant axis distance results as a sum of the larger and the smaller half-diameter of the gear wheels (3, 4, 5, 6, 4', 5'), **and wherein, further,**
a gear wheel is held rigidly in the center on the central axis (3, 6), whereas the second gear wheel can turn on the axis (3, 6) but is axially connected to the tilting axis (2) of at least one lever (14) such that the epicyclic gear, by means of a relative movement transferred to the axis of rotation (2) of the lever (14), generates an oscillating movement of the lever (14) which, with an attached pull- -push rod (15), can linearly move a working piston (16) in a sleeve.

2. The epicyclic gear piston machine according to Claim 1, **characterized in that** the oscillating movement of the lever (14) can be used as an upstroke (23).

3. The epicyclic gear piston machine according to Claim 1 or 2, **characterized in that** the oscillating movement of the lever (14) can be used as a downstroke (22).

4. The epicyclic gear piston machine according to Claim 1, **characterized in that** the oscillating movement of the lever (14) can be used as an upstroke (23) and a downstroke (22).

5. The epicyclic gear piston machine according to any one of the preceding claims, **characterized in that** the revolving gear wheels are symmetrically designed, and in addition to the revolving gear wheels (4, 5), two further, structurally identical gear wheels (4', 5') are arranged at a spacing of 180 degrees.

6. The epicyclic gear piston machine according to any one of the preceding claims, **characterized in that** the number of levers (14) about the tilting axis (2) is greater than one.

7. The epicyclic gear piston machine according to any one of the preceding claims, **characterized in that** the number of pistons (16) is greater than one.

8. The epicyclic gear piston machine according to any one of the preceding claims, **characterized in that** the pistons (16) can also be replaced by containers with membranes.

9. The epicyclic gear piston machine according to any one of the preceding claims, **characterized in that** it can be used as both an engine and a working machine.

## Revendications

1. Moteur à piston à engrenage épicycloïdal avec un engrenage épicycloïdal et un système de levier, l'axe de rotation (2) et l'axe de levier (2) étant montés de manière centrée, **caractérisée en ce que** l'engrenage épicycloïdal comprend deux roues dentées au centre (3, 6), autour desquelles au moins deux autres roues dentées (4, 5, 4', 5') tournent sur une trajectoire circulaire définie (7) avec un diamètre constant, les roues dentées susmentionnées (3, 4, 5, 6, 4', 5') présentant chacune, en tant que deux paires, une taille identique et une configuration elliptique, et les roues dentées tournantes (4, 5, 4', 5') étant respectivement reliées de manière fixe entre elles, de telle sorte qu'entre les roues dentées au centre (3, 6) et les roues dentées tournantes (4, 5, 4', 5'), il en résulte une distance axiale constante en tant que somme du demi-diamètre le plus grand et du demi-diamètre le plus petit des roues dentées (3, 4, 5, 6, 4', 5'), **et en outre**
une roue dentée au centre étant maintenue fixe sur l'axe central (3, 6), la deuxième roue dentée au centre pouvant par contre tourner sur l'axe (3, 6), mais étant reliée axialement à l'axe de basculement (2) d'au moins un levier (14), de telle sorte que l'engrenage épicycloïdal, au moyen d'un mouvement relatif transmis à l'axe de rotation (2) du levier (14), produit un mouvement oscillant du levier (14) qui, avec une tige de traction-poussée (15) raccordée, peut déplacer un piston de travail (16) en ligne droite dans un manchon.

2. Moteur à piston à engrenage épicycloïdal selon la revendication 1,
**caractérisée en ce que** le mouvement oscillant du levier (14) peut être utilisé en tant que course ascendante (23).

3. Moteur à piston à engrenage épicycloïdal selon la revendication 1 ou 2,
**caractérisée en ce que** le mouvement oscillant du levier (14) peut être utilisé en tant que course descendante (22).

4. Moteur à piston à engrenage épicycloïdal selon la revendication 1,
**caractérisée en ce que** le mouvement oscillant du levier (14) peut être utilisé en tant que course ascendante (23) et course descendante (22).

5. Moteur à piston à engrenage épicycloïdal selon l'une quelconque des revendications précédentes, **caractérisée en ce que** les roues dentées tournantes sont réalisées sous forme symétrique, et deux autres roues dentées (4', 5') de construction identique sont agencées à une distance de 180 degrés en plus des roues dentées tournantes (4, 5).

6. Moteur à piston à engrenage épicycloïdal selon l'une quelconque des revendications précédentes, **caractérisée en ce que** le nombre de leviers (14) autour de l'axe de basculement (2) est supérieur à un.

7. Moteur à piston à engrenage épicycloïdal selon l'une quelconque des revendications précédentes, **caractérisée en ce que** le nombre de pistons (16) est supérieur à un.

8. Moteur à piston à engrenage épicycloïdal selon l'une quelconque des revendications précédentes, **caractérisée en ce que** les pistons (16) peuvent également être remplacés par des réservoirs avec des membranes.

9. Moteur à piston à engrenage épicycloïdal selon l'une quelconque des revendications précédentes, **caractérisée en ce qu'**elle peut être utilisée à la fois en tant que moteur et en tant que machine.
